# EUROPÄISCHE PATENTSCHRIFT

(11) **EP 1 841 974 B1**
(45) Veröffentlichungstag und Bekanntmachung des Hinweises auf die Patenterteilung: **15.05.2013**
(21) Anmeldenummer: 05821882.7
(22) Anmeldetag: 17.12.2005
(51) Int. Cl.: F16C 29/08, F16C 29/06

(54) **LINEARWÄLZLAGER**
LINEAR ROLLER BEARING
ROULEMENT LINEAIRE

(30) Priorität: 27.01.2005 DE 102005003710
(43) Veröffentlichungstag der Anmeldung: 10.10.2007
(73) Patentinhaber: Schaeffler Technologies AG & Co. KG, 91074 Herzogenaurach (DE)
(72) Erfinder: KELLER, Peter, 66892 Bruchmühlbach-miesau (DE); RUDY, Dietmar, 66501 Kleinbundenbach (DE)
(86) Internationale Anmeldenummer: PCT/EP2005/013637
(87) Internationale Veröffentlichungsnummer: WO 2006/079397

(56) Entgegenhaltungen:
- EP-A- 0 810 380
- DE-U1- 9 422 394
- US-A- 5 531 521
- US-A- 5 590 965

## Beschreibung

Die vorliegende Erfindung betrifft Linearwälzlager, mit einem Führungswagen, der etwa u-förmig gebildet ist und mit seinen beiden Schenkeln eine Führungsschiene umgreift.

Aus US 5,590,965 A beispielsweise ist ein Linearwälzlager bekannt, dessen u-förmig gebildeter Führungswagen auf eine Führungsschiene aufgesetzt ist. Die beiden Schenkel des Führungswagen umgreifen die Führungsschiene, die eine Oberseite und zwei einander gegenüberliegende Längsseiten aufweist. Die beiden Längsseiten sind jeweils mit mehreren Kugelrillen für Kugeln versehen. Die beiden Schenkel des Führungswagens sind an ihren einander zugewandten Seiten ebenfalls mit Kugelrillen versehen, wobei die Kugelrillen des Führungswagens und die Kugelrillen an der Laufschiene Lastkanäle für die Kugeln bilden. In diesem Lastkanal übertragen die Kugeln Lasten zwischen der Führungsschiene und dem Führungswagen. Die Laufbahnen bei diesen bekannten Linearwälzlager sind in X-Anordnung ausgerichtet. Gleichwertige Linearwälzlager sind bekannt, bei denen die Laufbahnen in O-Anordnung zueinander stehen. Wenn an dem Führungswagen eine Vertikalkraft angreift, die den Führungswagen weg von der Führungsschiene zieht, übertragen die Kugeln des unteren Lastkanals diese Zugkraft, wobei das obere Viertel der an der Führungsschiene ausgebildeten Kugelrille diese Zugkräfte übernimmt. Diese Kugelrille kann demzufolge als Zuglaufbahn bezeichnet werden.

Wenn auf den Führungswagen eine Druckkraft ausgeübt wird, übertragen die Kugeln beider Lastkanäle diese Druckkraft.

Der Führungswagen ist an seinen beiden Stirnseiten mit jeweils einem Abstreifer zum Abstreifen von Fremdstoffen wie Späne, Stäube und Kühlflüssigkeiten von der Führungsschiene versehen. Dieser Abstreifer weist eine Abstreifanlage auf, die durch eine Dichtlippe oder eine Dichtkante gebildet sein kann. Diese Abstreifanlage steht in Abstreifkontakt mit den Längsseiten und der Oberseite der Führungsschiene. Zu diesem Zweck weist dieser Abstreifer an seiner Abstreifanlage eine an die Führungsschiene angepasste Kontur auf, so dass die Abstreifanlage auch in die Kugelrillen eingreift.

Ein gattungsgemässe Abstreifanlage ist aus der

EP 0810380 bekannt.

Wenn der Führungswagen auf die Führungsschiene montiert wird, ist darauf zu achten, dass der Abstreifer mit seiner Abstreifanlage einwandfrei zur Führungsschiene ausgerichtet ist. Dies ist erforderlich, damit ein einwandfreier Abstreifkontakt des Abstreifers mit der Führungsschiene gewährleistet ist. Erst bei lagerichtiger Positionierung des Abstreifers kann dieser an den Führungswagen fixiert werden.

Wenn die Abstreifanlage durch eine Dichtlippe gebildet ist, liegt diese Dichtlippe unter leichter elastischer Vorspannung sowohl an der Oberseite als auch an den beiden Längsseiten der Führungsschiene an. Betrachtet man den Teil der Dichtlippen, der an beiden Längsseiten der Führungsschiene anliegt ohne Berücksichtigung jenes Teils der Dichtlippe, der an der Oberseite der Führungsschiene anliegt, sind die elastischen Rückstellkräfte der auf beiden Seiten der Führungsschiene anliegenden Dichtlippe in einem Kräftegleichgewicht. Es ist möglich, dass aufgrund dieses Kräftegleichgewichts eine einwandfreie Positionierung des Abstreifers gegeben ist. Tatsächlich wirken jedoch zusätzlich die elastischen Rückstellkräfte des Teils der Dichtlippe, der an die Oberseite der Führungsschiene angedrückt ist. Die hier wirksame Rückstellkraft der Dichtlippe zieht den Abstreifer nach oben, so dass die an die Längsseiten der Führungsschiene angedrückten Teile der Dichtlippe ebenfalls nach oben gezogen werden. Das bedeutet jedoch, dass die in die Zuglaufbahn der Führungsschiene eingreifenden Teile der Dichtlippe unzulässig zusammengedrückt werden. Eine einwandfreie Wirkung des Abstreifers ist somit nicht gewährleistet. Wenn der Abstreifer in dieser falschen Position am Führungswagen fixiert wird, stellt sich zumindest ein deutlich erhöhter Verschleiß an den Dichtlippen im Bereich der Zuglaufbahn ein.

Dieses Problem kann auch bei Linearwälzlagern auftreten, die lediglich in einer Ebene gelagert sind.

Aufgabe der vorliegenden Erfindung ist es, ein Linearwälzlager nach den Merkmalen des Oberbegriffs des Anspruchs 1 anzugeben, bei dem ein einfaches Ausrichten des Abstreifers zur Führungsschiene möglich ist.

Erfindungsgemäß wird diese Aufgabe dadurch gelöst, dass der Abstreifer einen ersten Anschlag zum Anschlagen an die Führungsschiene aufweist, wobei das Anschlagen des ersten Anschlags eine unzulässige Lage des Abstreifers auf der Führungsschiene angibt.

Wenn der erste Anschlag wie beschrieben in der einen Richtung anschlägt, kann es zweckmäßig sein, einen zweiten Anschlag zum Anschlagen an die Führungsschiene vorzusehen, wobei das Anschlagen des zweiten Anschlags ebenfalls eine unzulässige Lage des Abstreifers auf der Führungsschiene angibt. Dieser zweite Anschlag ist dann in der gleichen Achse wie der erste Anschlag wirksam, jedoch in der entgegengesetzter Richtung. Beim Ausrichten des Abstreifers an der Führungsschiene können beim Einstellen erst der eine, und dann der andere Anschlag angefahren werden. Dann kann in Kenntnis der beiden Anschlagsituationen eine mittlere Stellung des Abstreifers in Bezug auf die Führungsschiene angefahren werden, wobei in dieser mittleren Position der Abstreifer an dem Führungswagen festgesetzt werden kann.

Der erfindungsgemäße Anschlag ist besonders bei Linearwälzlagern geeignet, bei denen der Führungswagen etwa u-förmig gebildet ist und mit seinen beiden Schenkeln die Führungsschiene umgreift. Die Führungsschiene hat eine Oberseite und zwei Längsseiten, wobei die Längsseiten mit Laufbahnen für die Wälzkörper versehen sind. An den Schenkeln des Führungswagens sind ebenfalls Laufbahnen vorgesehen, die gemeinsam mit den Laufbahnen der Führungsschiene Lastkanäle für die Wälzkörper begrenzen. Der Abstreifer steht mit den Längsseiten und der Oberseite der Führungsschiene in Abstreifkontakt.

Wenn der Abstreifer an der Führungsschiene ausgerichtet wird, kann beispielsweise der Abstreifer aufgrund der elastischen Rückstellkräfte der mit der Oberseite der Führungsschiene in Absteifkontakt stehenden Dichtlippe soweit nach oben verschoben sein, dass der erste Anschlag gegen die Führungsschiene anschlägt. Dann kann es genügen den Abstreifer etwas zurückzunehmen, so dass der Anschlag wieder frei ist. Der Abstreifer kann dann an dem Führungswagen fixiert werden.

Der erste Anschlag kann beispielsweise so ausgebildet sein, dass er gegen die Zuglaufbahn der Führungsschiene anschlägt.

Der zweite Anschlag kann so ausgebildet sein, dass er gegen die Oberseite der Führungsschiene anschlägt.

Es ist zweckmäßig, dass die Abstreifianlage den Anschlag in Richtungen auf die Führungsschiene überragt. Es genügt, wenn die Abstreifanlage um einige wenige zehntel Millimeter den Anschlag überragt. Auf diese Weise ist sichergestellt, dass selbst in der Anschlagsituation keine zu große Deformation der Abstreifianlage erfolgt.

Erfindungsgemäße Linearwälzlager können beispielsweise vier Lastkanäle aufweisen, die in X- oder in O-Anordnung zueinander stehen. Der erste Anschlag kann dann auf einfache Art und Weise so gebildet sein, dass er gegen die jeweilige Zuglaufbahn des Lastkanals anschlägt. Wenn Zugbelastungen des Führungswagens von den Wälzkörpern in den ersten Lastkanälen übertragen werden, können Druckbelastungen des Führungswagens von den Wälzkörpern in den zweiten Lastkanälen übertragen werden.

Der etwa u-förmige Abstreifer ist vorzugsweise an seinen beiden Schenkeln in Abstreifkontakt mit den Längsseiten und mit seinen die beiden Schenkel verbindenden Quersteg in Abstreifkontakt mit der Oberseite der Führungsschiene. Bei dieser Ausbildung können die bereits zuvor beschriebenen vorteilhaften Ausbildungen problemlos umgesetzt werden.

Der Abstreifer kann eine mit der Abstreifanlage versehene plattenförmige Dichtung aufweisen. Da diese Dichtungen oftmals aus einem biegeweichen elastischen Werkstoff gebildet sind, kann es zweckmäßig sein, wenn der Abstreifer eine steife Stützplatte als Stütze für die Dichtung aufweist. Eine erfindungsgemäße Weiterbildung sieht vor, dass diese Stützplatte zu dem mit dem ersten und mit dem zweiten Anschlag versehen ist. Die Stützplatte übernimmt demzufolge mehrere Funktionen, die ohne großen Aufwand bereitgestellt sind.

Wenn die Führungsschiene an jeder Längsseite beispielsweise mit zwei Kugelrillen versehen ist, kann der Abstreifer mit zwischen und in diese beiden Kugelrillen eingreifenden Nasen versehen sein. Diese Nasen der Stützplatte können jeweils mit dem ersten Anschlag versehen sein.

Die Nasen der Dichtung können mit ihrer Abstreifanlage in Abstreifkontakt mit den Laufbahnen der Führungsschiene stehen. Auch hier kann es zweckmäßig sein, dass im Bereich der Nasen die Abstreifanlage den an der Nase der Stützplatte vorgesehenen ersten Anschlag etwas überragt. Die Stützplatte und die Dichtung können formschlüssig miteinander verbunden sein, so dass eine eindeutige Ausrichtung der Stützplatte und der Dichtung zueinander gewährleistet ist.

Weiter oben wurde bereits erwähnt, dass der Abstreifer u-förmig ausgebildet sein kann. In diesem Fall kann die Stützplatte an ihrem die Führungsschiene an ihrer Oberseite übergreifenden Quersteg mit dem zweiten Anschlag versehen sein. Dieser zweite Anschlag kann dann problemlos gegen die Oberseite der Führungsschiene beim Ausrichten des Abstreifers anschlagen.

Nachstehend wird die Erfindung anhand eines in insgesamt vier Figuren abgebildeten Ausführungsbeispieles näher erläutert. Es zeigen:
- Figur 1: einen erfindungsgemäßen Abstreifer in Explosionsdarstellung,
- Figur 2: den Abstreifer aus Figur 1 in perspektivischer Darstellung, geschnitten und
- Figur 3: in perspektivischer und vergrößerter Darstellung eine Dichtung des Abstreifers gemäß Figur 2 und
- Figur 4: ein erfindungsgemäßes Linearwälzlager teilweise geschnitten.

### Ausführliche Beschreibung der Zeichnung

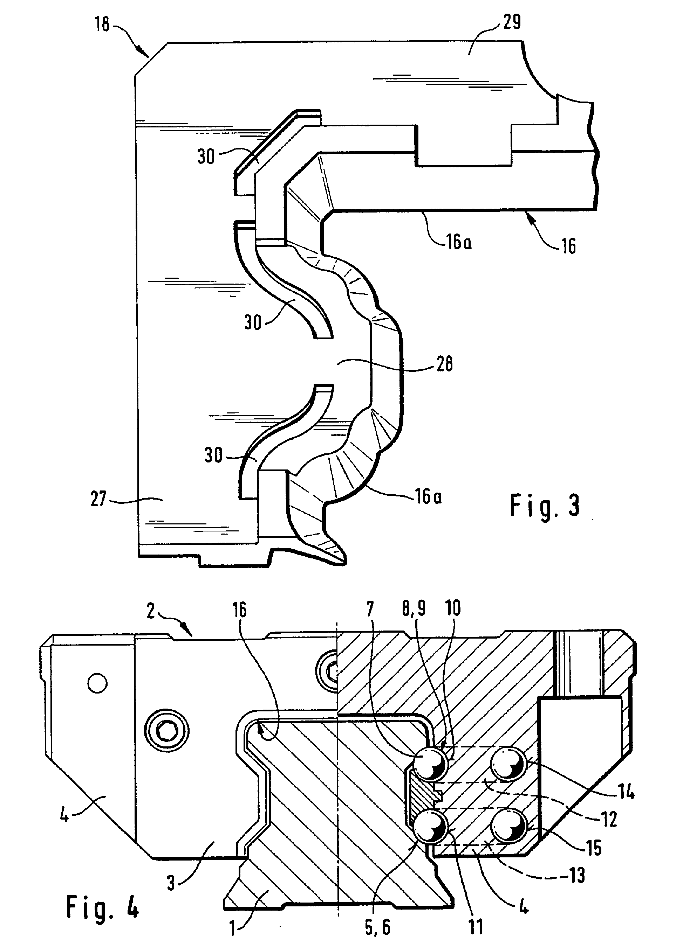

Das in Figur 4 abgebildete erfindungsgemäße Linearwälzlager weist einen auf einer Führungsschiene 1 längsverschieblich geführten Führungswagen 2 auf. An beiden Stirnseiten des Führungswagens 2 sind Abstreifer 3 lösbar befestigt. Der Führungswagen 2 weist ein im Wesentlichen u-förmiges Profil auf. Der Führungswagen 2 umgreift mit seinen beiden Schenkeln 4 die Führungsschiene 1.

Die Führungsschiene 1 weist eine Oberseite und zwei einander gegenüberliegende Längsseiten auf, wobei die Längsseiten jeweils mit mehreren durch Kugelrillen 5 gebildete Laufbahnen 6 für Kugeln 7 versehen sind. Die vier Kugelrillen 5 der Führungsschiene 1 sind in o-Anordnung zueinander angeordnet.

Der Führungswagen 2 weist an seinen beiden Schenkeln 4 an seinen den Längsseiten der Führungsschiene 1 zugewandten Seiten jeweils zwei den Laufbahnen 6 gegenüberliegende Laufbahnen 8 auf, die ebenfalls als Kugelrillen 9 gebildet sind. Die Kugelrillen 5, 9 der Führungsschiene 1 und des Führungswagens 2 begrenzen erste und zweite Lastkanäle 10, 11, in denen die Kugeln 7 unter Last an den Kugelrillen 5, 9 abwälzen. Gestrichelt angedeutete Umlenkkanäle 12, 13 und Rücklaufkanäle 14, 15 verbinden Anfang und Ende der Lastkanäle 10, 11 endlos miteinander.

Wenn an dem Führungswagen 2 Zugkräfte angreifen, die den Führungswagen 2 nach oben weg von der Führungsschiene 1 ziehen, übertragen die Kugeln 7 der ersten Lastkanäle 10 die Last. Der Lastkanal 10 weist demzufolge eine Zuglaufbahn auf. Wenn auf den Führungswagen 2 Druckkräfte einwirken, übertragen die zweiten Lastkanäle die Last. Der Lastkanal 11 weist demzufolge eine Drucklaufbahn auf.

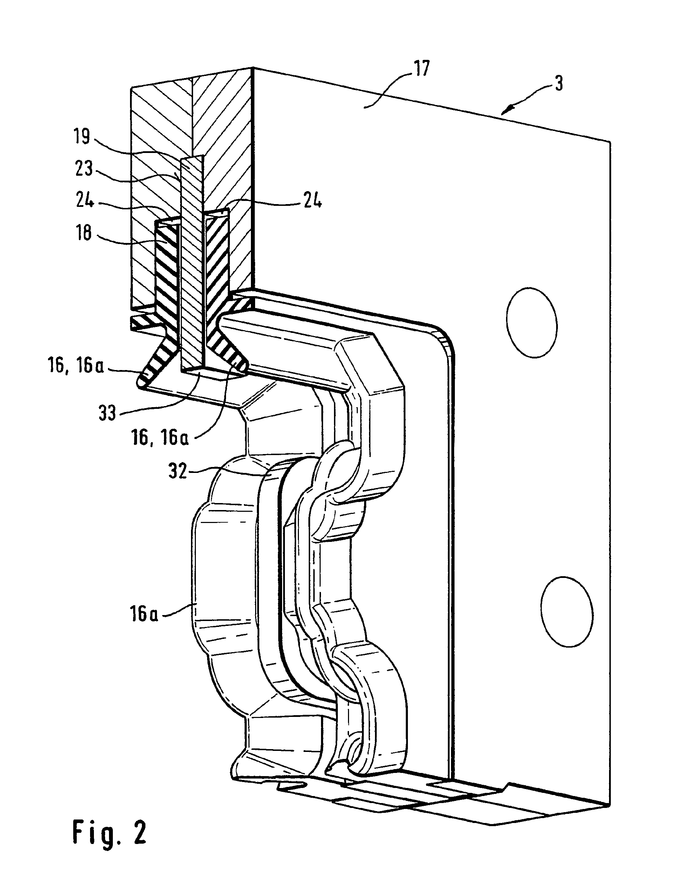

Der Abstreifer 3 ist an seinem Innenumfang mit einer Abstreifanlage 16 versehen, die vorliegend durch eine Dichtlippe 16a gebildet ist, wie insbesondere der weiter unten beschriebenen Figur 2 zu entnehmen ist. Die Abstreifanlage 16 ist an die Kontur der Führungsschiene 1 angepaßt. Der Abstreifer 3 steht mit seiner Abstreifanlage 16 in Abstreifkontakt mit der Oberseite und den beiden Längsseiten der Führungsschiene 1.

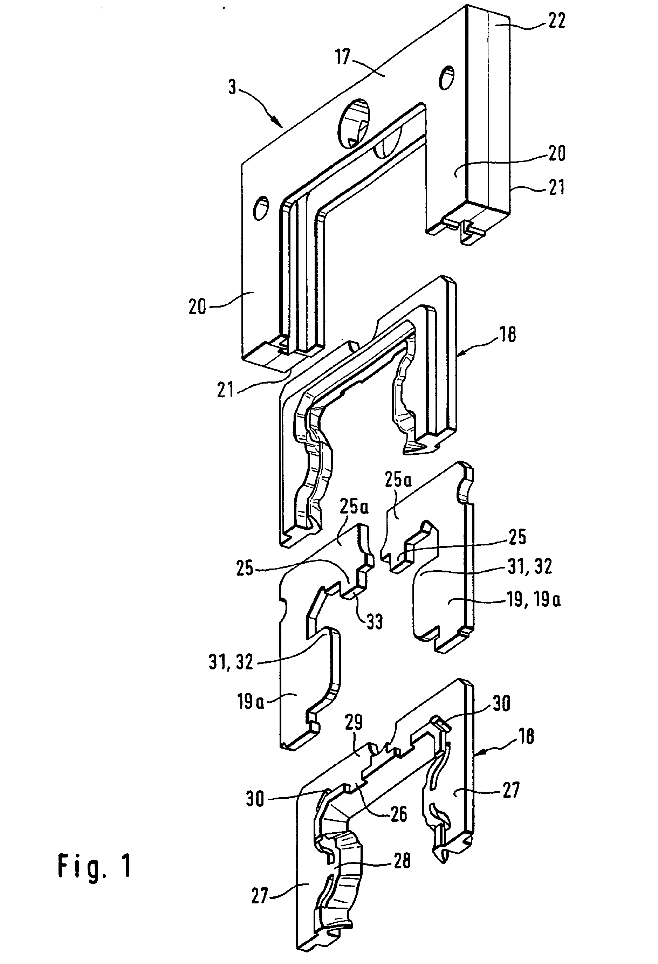

Der Abstreifer 3 wird nun nachstehend anhand der Figuren 1 bis 3 ausführlich beschrieben. Figur 1 zeigt die Einzelteile des erfindungsgemäßen Abstreifers 3. In einem Gehäuse 17 sind zwei aus biegeweichem Material gebildete plattenförmige Dichtungen 18 in Schienenrichtung hintereinander angeordnet. Zwischen den beiden Dichtungen 18 ist eine Stützplatte 19 angeordnet, an der die beiden Dichtungen 18 mit ihren der Stützplatte 19 zugewandten Seiten abgestützt sind.

Das Gehäuse 17 weist im Längsschnitt durch den Führungswagen 2 gesehen ein etwa u-förmiges, zur Führungsschiene 1 geöffnetes Schnittprofil auf. Die beiden Schenkelteile 20, 21 dieses Schnittprofils bilden eine Vorderwand und eine Rückwand des Gehäuses 17, wobei die Rückwand dem Führungswagen 2 zugewandt ist. Ein die beiden Schenkelteile 20, 21 verbindendes Bodenteil 22 bildet eine Umfangswand des Gehäuses 17.

Das Gehäuse 17 ist mit einer erster Aufnahme 23 für die Stützplatte 19 versehen. Wenn die Stützplatte 19 einwandfrei in der ersten Aufnahme 23 angeordnet ist die Stützplatte 19 in allen Raumachsen positionsgenau ausgerichtet. Figur 2 zeigt die erste Aufnahme 23 mit rechteckigem Querschnitt, wobei diese erste Aufnahme 23 sowohl im Bodenteil 23 als auch in den Schenkelteilen 20, 21 ausgebildet ist.

Das Gehäuse 17 ist ferner mit einer zweiten Aufnahme 24 für die beiden Dichtungen 18 versehen. Die beiden zweiten Aufnahmen 24 sind ebenfalls in der Figur 2 abgebildet. Auch die zweiten Aufnahmen 24 sind hier als rechteckförmige Ausnehmung sowohl in dem Bodenteil 22 als auch in den Schenkelteilen 20, 21 ausgebildet. Wenn die Dichtungen 18 einwandfrei in diesen zweiten Aufnahmen 24 aufgenommen sind, sind sie in allen Raumachsen positionsgenau ausgerichtet. Die Dichtungen 18 sind mit ihrer einen Stirnseite an der Vorderwand und der Rückwand des Gehäuses 17 und mit ihrer anderen Stirnseite an der Stützplatte 19 abgestützt. Selbst wenn eine der beiden Dichtungen 18 entfernt wird, ist somit gewährleistet, dass die andere verbleibende Dichtung 18 einwandfrei und positionsgenau in dem Gehäuse 17 gehalten ist.

Die plattenförmigen Dichtungen 18 können problemlos aus dem Gehäuse 17 herausgenommen und durch andere Dichtungen ersetzt werden. Wenn der Führungswagen mit dem montierten Abstreifer 3 auf der Führungsschiene 1 angeordnet ist, braucht lediglich der Abstreifer 3 von dem Führungswagen 2 gelöst zu werden. Dann kann das Gehäuse 17 des Abstreifers 3 nach oben von der Führungsschiene 1 abgenommen werden. Die beiden Dichtungen 18 und die Stützplatte 19 können zunächst auf der Führungsschiene 1 verbleiben. Da die beiden Dichtungen 18 vorzugsweise aus einem biegeweichen Material gebildet sind, können diese derart gebogen werden, dass sie von der Führungsschiene 1 abgenommen werden können. Nun können neue Dichtungen aufgesetzt werden und das Gehäuse kann wieder aufgeführt werden.

Die Dichtungen 18 und die Stützplatte 19 sind darüber hinaus formschlüssig miteinander verbunden. Wie der Figur 1 zu entnehmen ist, ist die Stützplatte 19 mit zwei Vorsprüngen 25 versehen. Die beiden Vorsprünge 25 sind je an einem Quersteg 25a der Schenkel 19a der Stützplatte 19 ausgebildet. Beide Dichtungen 18 sind mit jeweils zwei Ausnehmungen 26 versehen, wobei die Vorsprünge 25 der Stützplatte 19 in die Ausnehmungen 26 der beiden Dichtung eingreifen. Die Tiefe der Ausnehmungen 26 beträgt etwa die Hälfte der Dicke der Stützplatte 19. Da die beiden Dichtungen 18 zu beiden Seiten der Stützplatte 19 angeordnet sind, können demzufolge die beiden Vorsprünge 25 der Stützplatte 19 sowohl in die Ausnehmungen 26 der einen wie auch der anderen Dichtung 18 eingreifen. Die vorliegend zweiteilig ausgeführte Stützplatte 19 kann auch einteilig ausgeführt sein. Dann sind die beiden Querstege 25a der Stützplatte 19 einstückig miteinander verbunden.

Bei dem hier dargestellten vierreihigen Linearwälzlager mit O-Anordnung sind die Kugelrillen 5, 9 an der Führungsschiene 1 derart angeordnet, dass die beiden Schenkel 27 der u-förmig gebildeten Dichtung 18 an ihren einander zugewandten Seiten jeweils mit einer vorspringenden Nase 27 versehen sind. Figur 3 zeigt einen Teil der Dichtung 18 in perspektivischer Darstellung mit der Nase 28. Dieser Figur ist ferner deutlich zu entnehmen, dass die Dichtlippe 16a der Kontur der Führungsschiene 1 angepaßt ist, so dass die Dichtlippe 16a einwandfrei in Abstreifkontakt mit der Führungsschiene 1 steht.

Zwischen der Nase 28 und dem die beiden Schenkel 27 verbindenden Quersteg 29 der Dichtung 18 erfährt die Dichtlippe 16a entlang ihrer Kontur ausgeprägte Umlenkungen. Auf diese Weise sind formbedingte steifigkeitserhöhte Stellen entlang der Ersteckung der Dichtlippe 16a ausgebildet. Da es jedoch vorteilhaft ist, wenn der Anpressdruck der Dichtlippe 16a an die Führungsschiene 1 gleichmäßig erfolgt, sind an diesen steifigkeitserhöhten Stellen gezielte Materialschwächungen an der Dichtung 18 vorgesehen. Diese gezielten Materialschwächungen bestehen im Ausführungsbeispiel darin, dass an den steifigkeitserhöhten Stellen mehrere die Dichtung 18 durchdringende, Schlitze 30 bildende Ausnehmungen vorgesehen. Diese Schlitze 30 sind mit geringem Abstand zu den Dichtlippen 16a angeordnet. An diesen Stellen sind demzufolge die Dichtlippen 16a nicht abgestützt, und können in Richtung auf die Schlitze 30 einfedern. Auf diese Weise kann gezielt ein gleichmäßiger Andruck der Dichtlippe 16a entlang der gesamten Erstreckung gewährleistet werden.

Diese Schlitze 30 sind sowohl im Bereich der Nasen 28 als auch im Bereich von Ecken vorgesehen, die von den beiden Schenkeln 27 und dem Quersteg 29 gebildet sind.

Wenn Dichtungen 18 für derartige Linearwälzlager an den Führungswagen 2 montiert werden sollen, ist darauf zu achten, dass die Dichtungen 18 einwandfrei zur Führungsschiene 2 ausgerichtet sind. Anderenfalls ist kein einwandfreier Abstreifkontakt des Abstreifers 3 mit der Führungsschiene 1 gewährleistet. Das positionsgenaue Ausrichten der Dichtung 18 - sei es nun bei Abstreifern mit oder ohne Gehäuse - wird durch die wirksamen elastischen Rückstellkräfte der an der Führungsschiene 1 anliegenden Dichtlippe 16a erschwert, was nachstehend erläutert wird. Denkt man sich die Dichtlippe 16a im Bereich des Querstegs 29 weg, besteht auf der Oberseite der Führungsschiene 1 keinerlei Konkakt der Dichtung mit der Führungsschiene 1. Lediglich die beiden Schenkel 27 mit ihrer Dichtlippe 16a stehen dann in Abstreifkontakt mit der Führungsschiene 1. In diesem Fall sind die Dichtlippen 16a elastisch gegen die Längsseiten der Führungsschiene 1 angefedert. Die wirksamen Andruckkräfte der Dichtlippen 16a zu beiden Seiten der Führungsschiene 1 stehen in einem Kräftegleichgewicht, so dass in dieser Situation eine einwandfreie Ausrichtung der Dichtung 18 in Bezug auf die Führungsschiene 1 gegeben ist.

Tatsächlich wirken jedoch zusätzlich elastische Rückstellkräfte der Dichtlippe 16a im Bereich des Quersteges 29, so daß die Dichtung 18 nach oben weg von der Führungsschiene 1 gefedert oder gezogen wird. Das bedeutet, dass die Dichtlippen 16a im Bereich der Nasen 28 in erhöhtem Maße gegen die die Zuglaufbahn bildende Kugelrille 5 des ersten Wälzkörperkanals 10 der Führungsschiene 1 angedrückt werden.

Wenn der Abstreifer 3 in dieser unzulässigen Ausrichtung an dem Führungswagen 2 festgesetzt wird, unterliegt die Dichtlippe 16a einem erhöhten Verschleiß, so daß eine zuverlässige Abstreifwirkung nicht gewährleistet ist. Um sicher zu stellen, dass bei der Montage des Abstreifers an den Führungswagen keine unzulässige Verformung der Dichtlippe auftreten kann, ist der Abstreifer 3 mit einem Anschlag 31 versehen, wie Figur 1 mit Bezug auf die Stützplatte 19 zeigt. Dieser Anschlag 31 ist zum Anschlagen an die Kugelrille 5 der Führungsschiene 1 des ersten Wälzkörperkanals vorgesehen.

Der Figur 1 ist zu entnehmen, dass der Anschlag 31 an einer Nase 32 gebildet ist. Die Stützplatte 19 weist an ihren beiden Schenkeln jeweils die einstückig angeformte Nase 32 auf. Der Figur 2 ist zu entnehmen, dass die Dichtlippe 16a die Nase 32 etwas überragt. Wenn die Dichtung 18 einwandfrei gegenüber der Führungsschiene 1 positioniert ist, ist somit sichergestellt, dass die Nase 32 außer Kontakt mit der Führungsschiene 1 steht. Wenn aufgrund der wirksamen Rückstellkräfte der Dichtlippe 16a an der Oberseite der Führungsschiene 1 der noch nicht an dem Führungswagen 2 fixierte Abstreifer 3 nach oben gezogen wird, kann dies nur soweit geschehen, bis die Nase 32 gegen die Führungsschiene 1 anschlägt. In dieser Anschlagssituation ist sichergestellt, dass die Dichtlippe 16a nicht unzulässig verformt ist. Der mit der Montage befasste Monteur kann zudem aufgrund des schlagartig erhöhten Widerstandes leicht feststellen, dass der Anschlag 31 bereits an der Führungsschiene 1 anliegt.

Der Abstreifer 3 ist mit einem weiteren Anschlag 33 versehen. Dieser Anschlag 33 ist an dem schon weiter oben beschriebenen Vorsprung 25 der Stützplatte 19 ausgebildet. Die Dichtlippe 16a überragt diesen Anschlag 33 in Richtung auf die Oberseite der Führungsschiene 1. Wenn der Abstreifer 3 während der Montage an den Führungswagen 2 zu weit nach unten gedrückt wird, schlägt der Anschlag 33 gegen die Oberseite der Führungsschiene 1 an. Die an der Oberseite anliegende Dichtlippe 16a wird aufgrund des Anschlags 33 nicht unzulässig stark gegen die Oberseite angedrückt, wird also nicht beschädigt. Der Abstreifer 3 ist zwischen den beiden beschriebenen Anschlagsituationen, vorzugsweise Mittenlage, einwandfrei positioniert und kann an den Führungswagen 2 fixiert werden.

### Bezugszahlenliste

| | | | |
|---|---|---|---|
| 1 | Führungsschiene | 27 | Schenkel |
| 2 | Führungswagen | 28 | Nase |
| 3 | Abstreifer | 29 | Quersteg |
| 4 | Schenkel | 30 | Schlitz |
| 5 | Kugelrille | 31 | Anschlag |
| 6 | Laufbahn | 32 | Nase |
| 7 | Kugel | 33 | Anschlag |
| 8 | Laufbahn | | |
| 9 | Kugelrille | | |
| 10 | erster Lastkanal | | |
| 11 | zweiter Lastkanal | | |
| 12 | Umlenkkanal | | |
| 13 | Umlenkkanal | | |
| 14 | Rücklaufkanal | | |
| 15 | Rücklaufkanal | | |
| 16 | Abstreifanlage | | |
| 16a | Dichtlippe | | |
| 17 | Gehäuse | | |
| 18 | Dichtung | | |
| 19 | Stützplatte | | |
| 19a | Schenkel | | |
| 20 | Schenkelteil | | |
| 21 | Schenkelteil | | |
| 22 | Bodenteil | | |
| 23 | erste Aufnahme | | |
| 24 | zweite Aufnahme | | |
| 25 | Vorsprung | | |
| 25a | Quersteg | | |
| 26 | Ausnehmung | | |

## Patentansprüche

1. Linearwälzlager, mit einem auf einer Führungsschiene (1) wälzgelagerten Führungswagen (2) und mit einem an wenigstens einer Stirnseite des Führungswagens (2) angeordneten Abstreifer (3) zum Abstreifen von Fremdstoffen wie Späne, Stäube und Kühlflüssigkeiten von der Führungsschiene (1), wobei der Abstreifer (3) mit seiner Abstreifanlage (16), vorzugsweise Dichtlippe (16a) oder Dichtkante, in Abstreifkontakt mit der Führungsschiene (1) steht, **dadurch gekennzeichnet, dass** der Abstreifer (3) einen ersten Anschlag (31) zum Anschlagen an die Führungsschiene (1) aufweist, und dass der Abstreifer (3) einen zweiten Anschlag (33) zum Anschlagen an die Führungsschiene (1) aufweist, wobei der Abstreifer (3) zwischen diesen beiden Anschlagpositionen an dem Führungswagen positioniert ist.

2. Linearwälzlager nach Anspruch 1, bei dem der Führungswagen (2) etwa u-förmig gebildet ist und mit seinen beiden Schenkeln (4) die Führungsschiene (1) umgreift, die eine Oberseite und zwei einander gegenüberliegende Längsseiten aufweist, wobei die beiden Längsseiten mit Laufbahnen (6) für Wälzkörper versehen sind, die zusammen mit an den Schenkeln (4) des Führungswagens (2) vorgesehenen Laufbahnen (8) Lastkanäle (10, 11) für die Wälzkörper begrenzen, wobei der Abstreifer (3) mit seiner Abstreifanlage (16) in Abstreifkontakt mit den Längsseiten und der Oberseite der Führungsschiene (1) steht.

3. Linearwälzlager nach Anspruch 1, bei dem der erste und der zweite Anschlag (31, 33) in einer gemeinsamen quer zu der Führungsschiene (1) angeordneten Achse und in entgegengesetzten Richtungen wirksam sind.

4. Linearwälzlager nach Anspruch 2, bei dem der erste Anschlag (31) zum Anschlagen gegen die Laufbahn (6) der Führungsschiene (1) des ersten oder des zweiten Lastkanales (10, 11) ausgebildet ist.

5. Linearwälzlager nach Anspruch 1, bei dem die Abstreifanlage (16) den Anschlag (31, 33) in Richtungen auf die Führungsschiene (1) überragt.

6. Linearwälzlager nach Anspruch 2, bei dem die Längsseiten der Führungsschiene (1) und die beiden Schenkel (4) des Führungswagens jeweils mit mehreren Laufbahnen (6, 8) für Wälzkörper versehen sind, wobei einander gegenüberliegende Laufbahnen (6, 8) der Führungsschiene (1) und des Führungswagens (2) Lastkanäle (10, 11) begrenzen, die in X- oder O-Anordnung zueinander stehen.

7. Linearwälzlager nach Anspruch 2, bei dem Zugbelastungen des Führungswagens (2) von den Wälzkörpern in den ersten Lastkanälen (10, 11) und Druckbelastungen des Führungswagens (2) von den Wälzkörpern in den zweiten Lastkanälen (10, 11) übertragen werden.

8. Linearwälzlager nach Anspruch 2, bei dem der etwa u-förmige Abstreifer mit seinen beiden Schenkeln (27) in Abstreifkontakt mit den Längsseiten und mit seinem die beiden Schenkel (27) verbindenden Quersteg (29) in Abstreifkontakt mit der Oberseite der Führungsschiene (1) steht.

9. Linearwälzlager nach Anspruch 1, bei dem der Abstreifer (3) eine mit der Abstreifanlage (16) versehene plattenförmige Dichtung (18) aufweist.

10. Linearwälzlager nach Anspruch 9, bei dem der Abstreifer (3) eine steife Stützplatte (19) als Stütze für die aus biegeweichem Werkstoff gebildete Dichtung (18) aufweist.

11. Linearwälzlager nach Anspruch 10, bei dem die Stützplatte (19) mit dem ersten und mit dem zweiten Anschlag (31, 33) versehen ist.

12. Linearwälzlager nach den Ansprüchen 2 und 10, bei dem die Dichtung (18) und die Stützplatte (19) an ihren Schenkeln (19a, 27) jeweils mit in Richtung auf den jeweils anderen Schenkel (19a, 27) vorspringenden Nasen (28, 32) versehen ist, wobei die Nasen (32) der Stützplatte (19) jeweils mit dem ersten Anschlag (31) versehen sind.

13. Linearwälzlager nach Anspruch 12, bei dem die Nasen (28) der Dichtung (18) mit ihrer Abstreifanlage (16) in Abstreifkontakt mit den Laufbahnen (6) der Führungsschiene (2) stehen.

14. Lineanrvälzlager nach Anspruch 3, bei dem die Stützplatte (19) und die Dichtung (18) an wenigstens einer Stelle formschlüssig ineinandergreifen.

15. Linearwälzlager nach Anspruch 11, bei dem die Stützplatte (19) an ihrem die Führungsschiene (1) an ihrer Oberseite übergreifenden Quersteg (25a) mit dem zweiten Anschlag versehen ist.

## Claims

1. Linear rolling bearing, having a guide carriage (2) which is mounted by means of rolling bearings on a guide rail (1), and having a scraper (3), arranged at at least one end side of the guide carriage (2), for scraping foreign objects such as chips, dust and cooling liquids from the guide rail (1), with the scraper (3) being in scraping contact, by means of its scraping system (16), preferably sealing lip (16a) or sealing edge, with the guide rail (1), **characterized in that** the scraper (3) has a first stop (31) for abutment against the guide rail (1), and **in that** the scraper (3) has a second stop (33) for abutment against the guide rail (1), with the scraper (3) being positioned on the guide carriage between these two stop positions.

2. Linear rolling bearing according to Claim 1, in which the guide carriage (2) is of approximately u-shaped design and engages with its two limbs (4) around the guide rail (1) which has an upper side and, situated opposite one another, two longitudinal sides, with the two longitudinal sides being provided with raceways (6) for rolling bodies, which raceways (6), together with raceways (8) provided on the limbs (4) of the guide carriage (2), delimit load channels (10, 11) for the rolling bodies, with the scraper (3) being in scraping contact, by means of its scraping system (16), with the longitudinal sides and with the upper side of the guide rail (1).

3. Linear rolling bearing according to Claim 1, in which the first and the second stop (31, 33) act in a common axis, which is arranged transversely with respect to the guide rail (1), and in opposite directions.

4. Linear rolling bearing according to Claim 2, in which the first stop (31) is designed for abutment against the raceway (6) of the guide rail (1) of the first or of the second load channel (10, 11).

5. Linear rolling bearing according to Claim 1, in which the scraping system (16) projects beyond the stop (31, 33) in directions of the guide rail (1).

6. Linear rolling bearing according to Claim 2, in which the longitudinal sides of the guide rail (1) and the two limbs (4) of the guide carriage are provided in each case with a plurality of raceways (6, 8) for rolling bodies, with raceways (6, 8), which face one another, of the guide rail (1) and of the guide carriage (2) delimiting load channels (10, 11) which are in an X-arrangement or O-arrangement with one another.

7. Linear rolling bearing according to Claim 2, in which tensile loadings of the guide carriage (2) are transmitted by the rolling bodies into the first load channels (10, 11), and compressive loadings of the guide carriage (2) are transmitted by the rolling bodies into the second load channels (10, 11).

8. Linear rolling bearing according to Claim 2, in which the approximately u-shaped scraper is in scraping contact, by means of its two limbs (27), with the longitudinal sides of the guide rail (1), and, by means of its transverse web (29) which connects the two limbs (27), with the upper side of the guide rail (1).

9. Linear rolling bearing according to Claim 1, in which the scraper (3) has a plate-shaped seal (18) which is provided with the scraping system (16).

10. Linear rolling bearing according to Claim 9, in which the scraper (3) has a rigid support plate (19) as a support for the seal (18) which is formed from flexible material.

11. Linear rolling bearing according to Claim 10, in which the support plate (19) is provided with the first and with the second stop (31, 33).

12. Linear rolling bearing according to Claims 2 and 10, in which the seal (18) and the support plate (19) are provided on their limbs (19a, 27) in each case with lugs (28, 32) which project in the direction of the in each case other limb (19a, 27), with the lugs (32) of the support plate (19) being provided in each case with the first stop (31).

13. Linear rolling bearing according to Claim 12, in which the lugs (28) of the seal (18) are in scraping contact, by means of their scraping system (16), with the raceways (6) of the guide rail (1).

14. Linear rolling bearing according to Claim 3, in which the support plate (19) and the seal (18) engage into one another in a form-fitting manner at at least one point.

15. Linear rolling bearing according to Claim 11, in which the support plate (19) is provided with the second stop on its transverse web (25a) which engages over the guide rail (1) at its upper side.

## Revendications

1. Palier à roulement linéaire, comprenant un chariot de guidage (2) monté sur roulement sur un rail de guidage (1) et un racloir (3) disposé sur au moins un côté frontal du chariot de guidage (2), pour racler des substances étrangères telles que des copeaux, des poussières et des liquides de refroidissement hors du rail de guidage (1), le racloir (3) étant en contact de raclage avec le rail de guidage (1) avec son appui de raclage (16), de préférence constitué par une lèvre d'étanchéité (16a) ou une arête d'étanchéité, **caractérisé en ce que** le racloir (3) présente une première butée (31) pour buter contre le rail de guidage (1), et **en ce que** le racloir (3) présente une deuxième butée (33) pour buter contre le rail de guidage (1), le racloir (3) étant positionné entre ces deux positions de butée sur le chariot de guidage.

2. Palier à roulement linéaire selon la revendication 1, dans lequel le chariot de guidage (2) est formé approximativement en forme de U et vient en prise avec ses deux branches (4) autour du rail de guidage (1), qui présente un côté supérieur et deux côtés longitudinaux opposés l'un à l'autre, les deux côtés longitudinaux étant pourvus de pistes de roulement (6) pour des corps de roulement qui délimitent, conjointement avec des pistes de roulement (8) prévues sur les branches (4) du chariot de guidage (2), des canaux de charge (10, 11) pour les corps de roulement, le racloir (3) étant en contact de raclage avec son appui de raclage (16) avec les côtés longitudinaux et le côté supérieur du rail de guidage (1).

3. Palier à roulement linéaire selon la revendication 1, dans lequel la première et la deuxième butée (31, 33) agissent suivant un axe commun disposé transversalement au rail de guidage (1) et dans des directions opposées.

4. Palier à roulement linéaire selon la revendication 2, dans lequel la première butée (31) est réalisée pour buter contre la piste de roulement (6) du rail de guidage (1) du premier ou du deuxième canal de charge (10, 11).

5. Palier à roulement linéaire selon à revendication 1, dans lequel l'appui de raclage (16) dépasse de la butée (31, 33) dans les directions du rail de guidage (1).

6. Palier à roulement linéaire selon la revendication 2, dans lequel les côtés longitudinaux du rail de guidage (1) et les deux branches (4) du chariot de guidage sont pourvus chaque fois de plusieurs pistes de roulement (6, 8) pour des corps de roulement, des pistes de roulement (6, 8) opposées l'une à l'autre du rail de guidage (1) et du chariot de guidage (2) délimitant des canaux de charge (10, 11) qui sont orientés les uns par rapport aux autres suivant un agencement en X ou en O.

7. Palier à roulement linéaire selon la revendication 2, dans lequel les contraintes de traction du chariot de guidage (2) sont transmises par les corps de roulement dans les premiers canaux de charge (10, 11) et les contraintes de pression du chariot de guidage (2) sont transmises par les corps de roulement dans les deuxièmes canaux de charge (10, 11).

8. Palier à roulement linéaire selon la revendication 2, dans lequel le racloir approximativement en forme de U avec ses deux branches (27) est en contact de raclage avec les côtés longitudinaux et avec sa nervure transversale (29) reliant les deux branches (27) est en contact de raclage avec le côté supérieur du rail de guidage (1).

9. Palier à roulement linéaire selon la revendication 1, dans lequel le racloir (3) présente un joint d'étanchéité (18) en forme de plaque pourvu de l'appui de raclage (16).

10. Palier à roulement linéaire selon la revendication 9, dans lequel le racloir (3) présente une plaque de support rigide (19) en tant que support pour le joint d'étanchéité (18) formé en un matériau élastique souple.

11. Palier à roulement linéaire selon la revendication 10, dans lequel la plaque de support (19) est pourvue de la première et de la deuxième butée (31, 33).

12. Palier à roulement linéaire selon les revendications 2 et 10, dans lequel le joint d'étanchéité (18) et la plaque de support (19) sont pourvus au niveau de leurs branches (19a, 27) à chaque fois de nez (28, 32) saillant dans la direction de l'autre branche respective (19a, 27), les nez (32) de la plaque de support (19) étant pourvus à chaque fois de la première butée (31).

13. Palier à roulement linéaire selon la revendication 12, dans lequel les nez (28) du joint d'étanchéité (18) sont en contact de raclage avec leur appui de raclage (16) avec les pistes de roulement (6) du rail de guidage (1).

14. Palier à roulement linéaire selon la revendication 3, dans lequel la plaque de support (19) et le joint d'étanchéité (18) viennent en prise l'un dans l'autre au niveau d'au moins un emplacement par engagement par correspondance géométrique.

15. Palier à roulement linéaire selon la revendication 11, dans lequel la plaque de support (19) est pourvue de la deuxième butée sur sa nervure transversale (25a) venant en prise par le dessus avec le rail de guidage (1) au niveau de son côté supérieur.
